# EUROPEAN PATENT APPLICATION

(11) **EP 2 452 874 A1**
(43) Date of publication of application: **16.05.2012**
(21) Application number: 10014472.4
(22) Date of filing: 10.11.2010
(51) Int. Cl.: B64D 11/00, B64D 11/06

(54) **Seat rails for aircrafts**

(71) Applicant: PFW Aerospace AG, 67346 Speyer (DE)
(72) Inventor: Kaufmann, Andreas, 67346 Speyer (DE); Christ, Andreas, 79110 Freiburg (DE); Felhauer, Tobias, 77797 Ohlsbach (DE); Schüssele, Lothar, 77948 Friesenheim (DE); Klausmann, Tobias, 79215 Biederbach (DE); Weber, Christian, 77790 Steinach (DE)
(74) Representative: Hörschler, Wolfram Johannes

(57) **Abstract**

The present invention relates to a supporting structure, particularly a seat rail (20) or a respective section thereof, having a mounting device (22, 28, 46, 68), by means of which individual passenger seats (18) are mounted and connected to said support structure (20) wherein said supporting device (20), comprises at least one hollow interior (66, 66.1, 66.2) establishing a hollow conductor (60) for bidirectional transfer of data from a master system (110, 112) to a plurality of participant systems 1 - ... n (114, 116; 118, 120) in a sending mode and from said participant system 1 - ... n (114, 116; 118, 120) to said master system (110, 112) in a receiving mode, establishing a WLAN or LAN within the passenger cabin (12) between the participant systems 1 - ... (114, 116; 118, 120) and said master system (110, 112).

## Description

### Background of the invention

US 2004/0048582 A1 discloses a device for transmitting signals and/or energy. A device is disclosed for transmitting at least one of signal or energy between a first electrical device on/or in a body of a vehicle and a second electrical device on/or in a seat of the vehicle, the vehicle having a rail system for the vehicle seat. A first transmission module is assigned to the first electrical device and in a second transmission module is assigned to the second electrical device, the first and second transmission modules forming a high-frequency wireless transmission path, the first transmission module being situated on/or in the vehicle body and being integrated into the rail system, the second transmission module being situated on/or in the vehicle seat and being adapted to be coupled into the rail system in such a way that at least one of the signal and energy transmission occurs via a displacement currently generated in the rail system.

WO 2004/052689 A1 is related to a transmission for seats movably disposed on a chassis.

This document is related to an arrangement for transmitting data and/or power between a chassis and a seat that is moveably disposed on that chassis by means of a guide rail. Several primary coils that support at least one primary winding are arranged in a fixed manner within the guide rail while at least one secondary coil comprising one secondary winding is placed on the seat. The primary coil is disposed within the guide rail in such a way that at least one primary and one secondary coil are positioned relative to each other so as to transmit data and/or power data and/or power.

US 5,363,464 is related to an electrical or conductive wave guide. An electrical or conductive wave guide is disclosed including an electric housing having a longitudinal access and central shell. A conductive layer is fixed to an inner surface and/or an outer surface of the housing to confine a electromagnetic radiation within the wave guide. Rips positioned in the channel may be used to further confine radiation. Sections of wave guides may be combined using connectors. A local area network can be formed using a plurality of sections of the wave guide, computers and bi-directional couplers.

US 2005/0258676 A1 is related to a passenger cabin seat power buzz. According to this solution, a system is disclosed for distributing signals to a plurality of seats that are mounted to a seat track at a floor surface, the seat track having a plurality of spaced apart openings. A conductive buzz is mounted beneath the floor surface and extends along each of said seats, said buzz, operable to conduct signals along an entire length of said buzz. A connector is adapted to plug into said buzz through one of said openings in said seat track so as to extend to a point below the floor and approximate a seat. Said buzz is operable to permit operation with said connector at substantially any point along its length. A passenger cabin system is disclosed for distributing signals throughout a passenger cabin. A passenger cabin floor is provided as well as a seat track, extending across said floor, said seat track being mounted on a subfloor that is located beneath said floor, said seat track having a plurality of openings there through. One or more passenger seats are mounted to said seats track at said floor. A conductive buzz is mounted to said subfloor between said subfloor and said floor, said buzz operable to conduct said signals along substantially the entire length of said seat tracks.

In aeroplanes, particularly aeroplanes for the transport of passengers seat rails are used, which serve the purpose to fasten passenger seats according to a certain seat pattern within in the passenger cabin. Said seat rails are being mounted according to different widths of a body of an aeroplane such as a "narrow body" or a "wide body"-aeroplane. Depending on the different comfort classes, such as first class, business class or economy class, the passenger seats of the respective classes offer a larger or narrower space for each of the passengers and further offer a different variety of entertainment facilities and programs particularly on long distance flights.

Particularly on those aeroplanes for the transport of passengers over long distances the entertainment systems to be arranged on each of said passenger seat such as in-seat video, ear-phone, TV-channels and internet connecting devices have an enormous importance nowadays concerning the comfort in view of the cargo fares for each passenger for a long distance flight. Passengers, which have to perform a long distance flight of about 12 hours and even more than that, usually have a high demand concerning the comfort regarding the entertainment program offered on board of a plane. Depending on the seat pattern of the individual seats placed in first class, business class or economy class, it has to be made sure, that within a passenger aero plane, entertainment systems have to be configured individually ― taking into account the different classes ― on each of said passenger seat located in either first class, business class or economy class.

Nowadays, signal transmitting wires are used and coupled to each of the individual passenger seats either arranged in the first class section, the business class section or the economy class section of the passenger cabin.

The data transferred to the respective seats of the different comfort classes according to the class pattern of the passenger cabin of a passenger aircraft is performed by data wires which are provided beneath the cabin floor of the passenger cabin. Each individual seat has a wire package by means of which the data is transferred to the respective seat. Data wires are normally made of copper and allow for providing different TV-channels for the entertainment system provided on each individual seat so that the respective passenger may select his or her individual seat entertainment program independent from the passenger seated adjacent or in front or in the back of him or her. By means of said data wires electrical data is transmitted to components of the passenger seats such as arm rests or back rests being electrically adjustable, i.e. said data wires are suitable for transmitting signals to each individual seat located in the passenger cabin. This means that kilometres of wire are necessary for a passenger airplane particular for a passenger airplane suitable for long distance flights. All these data wires have to be isolated versus one another and have to be arranged beneath the passenger cabin floor such that neither the occurring of brake down of data wires, i.e. undesired interruptions, nor a heat development are to be envisaged. To prevent this, at least one layer of insulation is necessary for the data transmitting wires. Given the weight of the wires alone, this already constitutes a considerable weight factor. The weight is still increased by the application of the at least one insulation around each of the wires, so that consequently, the comfort requirements for the passenger seat come along with solutions according to the prior art that the weight of the airplane is increased by the wire necessary to transport the individual entertainment program of the passenger seats.

### Summary of the invention

The object of the present invention is to provide for a signal transmitting seat rail, particularly for a passenger aircraft, said seat rail providing a transmission of signals by the material of the seat rail itself without requiring discrete data wires.

A further object of the present invention is to provide for a data transmission system in a passenger cabin of a passenger aircraft without making use of individual wires to be arranged beneath the passenger cabin floor to transmit different modes of an entertainment program to each individual seat located in the passenger cabin.

According to the present invention, a supporting structure, particularly a seat rail, comprises a hollow interior having a rectangular, circular or oval cross section to mention but a few, the material walls on top and ceiling thereof and those limiting the side walls thereof serving as a transmission path for signal data signals to each of the individual passenger seats located within the passenger cabin of an aeroplane.

According to the present invention, a data transmission structure is provided according to which a master system comprises a master transceiver which is connected by means of a coaxial connection to a seat rail having a hollow interior. The coaxial connection is connected to that seat rail or part of a seat rail, respectively, by a seat rail-transition area. A part of the seat rail may be connected to adjacently located parts of a seat rail by means of transition areas or may form an end-section of a seat rail located within the cabin floor of a passenger cabin.

At connection sections adjacently arranged individual passenger seat having an individual passenger transceiver is connected to the sections of the seat rail located within the passenger cabin floor. By the system provided according to the present invention the master system provides data to a plurality of individual passenger seats, i.e. participant systems 1 - ... n.

According to the present invention, said master system provides for the distribution of an entertainment system, for instance for the first class only, and taken into account some limitations for the business class and still taking into account further limitations concerning the economy class.

Dependent on the configuration of the master system the distribution of the entertainment system, the number of passenger seats to which said individual entertainment program such as radio, TV or internet is provided may be well defined according to the different comfort levels in first class, business class and economy class. Said master system is configurable as to serve the different comfort levels in that the entire program and entertainment selection may be offered to those seats located in the first class, a slightly reduced selection may be offered to those passengers seated in seats located in the business class and a limited access to entertainment systems is provided for those passengers seated in the individual passenger seats of the economy class. Instead of a master system for providing an entertainment system for all of the three comfort classes but configured depending on the respective class, it is conceivable, to provide for a master distribution system including a major transceiver for each of the classes, first class, business class and economy class, separately and independent from one another.

Taking into account the solution according to the present invention, in an advantageous embodiment, a bi-directional communication is achievable by means of the present invention. Within one and the same supporting structures such as a seat rail, data communication is established simultaneously in both directions. To give a sample of a ratio of sent and received data the sent data, i.e. the data sent from the master system to the individual seat may amount to 80% of the entire data volume, whereas the data received from the major system from an individual seat may amount to a percentage of approximately 20%, depending on the capacity of the master system. This asymmetrical data volume to be transmitted establishes one larger advantage of the system according to the present invention as compared to an Ethernet system, to give an example. Nevertheless, an equal data communication with a ratio of 50% to 50% is feasible with the inflight entertainment system as well. The main advantage of the solution according to the invention as compared to an Ethernet system is the fact, that according to the present invention a defined and well established communication election is delivered to each passenger seat, i.e. to each client, whereas in applications on an Ethernet system, all participants use a selection of the respective services offert by the Ethernet system, which is not well defined.

Given that two seat rails are provided oriented substantially parallel to one another, one of said seat rails may be used as a data signal channel in a first direction and the parallel extending seat rail may be used in reverse direction, i.e. the second direction opposite to the first direction for the data signals to be transferred either from the major system and the major transceiver to said individual passenger system or on the other hand from said individual passenger system to the master system. The two seat rail concept may be used for purposes of redundancy.

According to the present invention the first frequency band is used for the emitting-mode and a second frequency band is being defined for the receiving mode only. Since said frequency bands are different from each other, no interferences will occur during simultaneous operation of individually passenger systems, i.e. simultaneous use of said individual seat entertainment systems by individual passengers simultaneously.

In an optional embodiment of the present invention different band widths are being implemented in terms of the use of the data signals for transmission in a first direction and for the reverse data transmission in a second direction. By means of choosing different download/upload band widths no interferences and no dependencies between individual seat entertainment systems will occur during simultaneous use of said entertainment systems by individual passengers.

The seat rail can be part of a network such as a local area network (LAN). Still further, it is conceivable to have different seat rails being connected with one another. In principle, each passenger is participant of said network so that single individual passengers communicate with one another directly or would communicate, i.e. sending data to the master system.

In an alternative embodiment, the individual transceivers, assigned to the passenger systems could be defined as receivers only, to create simple broadcasting systems within the entertainment system of individual passenger seats located within the passenger cabin. Said seat rail could either be used for transmission of controlling signals, sensor data or information concerning the individual status of the operating state of rows of seats, of toilets or kitchens to mention but a few. By the use of the seat rails as a structure for transmitting control signal sensor data and messages concerning the status of systems, the passenger cabin as well as a cargo compartment could be connected to the system. In an alternative embodiment, a number of hollow conductors are integrated to one seat rail. This allows for the implementation of different cross sections of each of the number of hollow conductors which in turn allows to providing different frequency bands within the data transmitting system. The hollow conductor could for instance have a rectangular shaped cross section; on the other hand other cross section geometries are conceivable as well if in an embodiment hollow conductor comprises a number of cross sections, said cross section each could adopt a different geometry concerning the cross section and, thus, allow for a separation signal path according to the different cross section geometries. According to the solution of the present invention a much weaker emitting power for the data signals to be distributed within the entertainment system is achievable when compared to the solutions according to the prior art of wireless communication. There is minimal radiation into the passenger cabin since the hollow conductors establish a closed loop system and very weak emissions will occur only, particularly in the passenger cabin. Provided that a mechanical failure of a seat rail occurs, the entertainment system will automatically be shut off to prevent emission into the passenger cabin immediately. A method for modulation is implemented particularly a multiple carrier modulation such as Coded Orthogonal Frequency Division Multiplex (COFDM) but is not limited thereto. Still further, the use of a time multiplexing method for the transmission of data signals is conceivable as well. According to the present invention it is conceivable, to provide for an Ethernet-DVB-T, or DVB-C bridge to provide for Ethernet or a local area network (LAN) to be implemented into the seat rail.

An advantageous aspect of the present invention is the low electrical power used for transmitting the data from the master system to the individual seat rails being ten times less than the transmission power used in a WLAN, and even hundred times less when compared to the use of a cell phone or a mobile phone.

### Brief description of the drawings

The present invention is described in more detail in connection with the accompanying drawings.
Figure 1 shows a cross section across the aisle of a passenger aircraft,
Figure 2 shows a side view of a passenger seat with dimensions thereof,
Figure 3 shows a connection fitting to connect an individual passenger seat with a supporting structure such as a seat rail,
Figure 4 shows a cross section of a passenger cabin of a passenger aero plane comprising the supporting structures, particularly a seat rail according to the present invention,
Figure 5 shows a representation in an enlarged scale of a supporting structure, particularly a seat rail according to the present invention,
Figures 6.1 and 6.2, respectively, show a coupling between a connection fitting and a signal transmitting supporting structure particularly a seat rail according to the present invention,
Figure 7 shows a schematical view of a connection for the coupling in and coupling out of data into the hollow conductor and the distribution thereof,
Figure 8 shows a scheme of a system for distributing in-flight entertainment with a major system and a major transmitter and a number of individual passenger participants 1 - ...n according to the present invention.

### Preferred embodiments

The term "supporting structure" comprises a seat rail as well as a cargo conveyor used in a cargo compartment of an aircraft, still further stringers used as a component to provide from a higher mechanical rigidity of the wings, are conceivable as well, as well as any suitable rigid structure used in an aeroplane. Supporting structures such as a seat rail are used in cabin floor equipment of a passenger airplane and are made of aluminium or a titanium aluminium alloy or the like.

Said supporting structures are preferably made as continuous profiles for example using the extrusion method or coated plastic material or electrically conducting plastic material for instance serving as rigid structures to increase mechanical strength.

Said supporting structures, particularly said seat rails may comprise different portions to be connected with one another in axial direction by means of transition areas. For instance, said supporting structure may comprise two seat rails, substantially arranged parallel to one another, supporting a row of seats, three or more seats according to the seat pattern in the different comfort classes for the passenger cabin of a passenger aircraft, such as first class, business class and economy class.

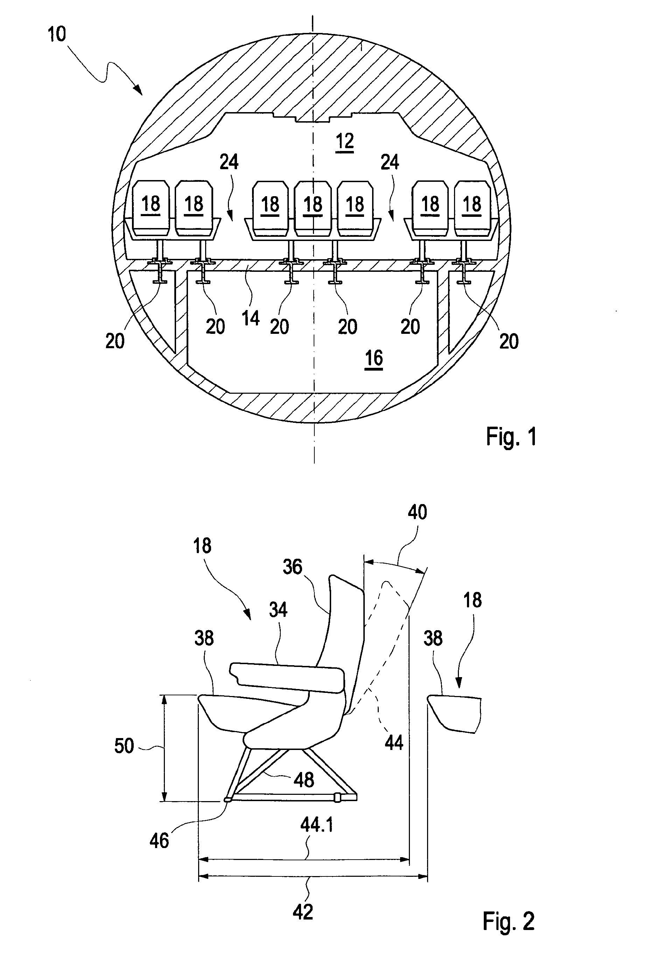

Figure 1 shows cross sections of a passenger cabin according to the state of the art.

Figure 1 shows a body 10 of a passenger cabin 12 having a cabin floor 14. Underneath the cabin floor 14 seat rails are being arranged substantially extending parallel to one another. On the seat rails 20 individual passenger seats 18 are being mounted. The cross section according to figure 1 shows a narrow body cross section having two parallel extending aisles labelled with reference number 24. Underneath said cabin floors 14 a cargo compartment 16 is located. Within said cabin floor 14, said seat rails 20 are being mounted which said individual passenger seats 18 are connected by the means of connection fittings.

Figure 2 schematically shows an individual passenger seat which is used within a passenger cabin on a passenger aircraft.

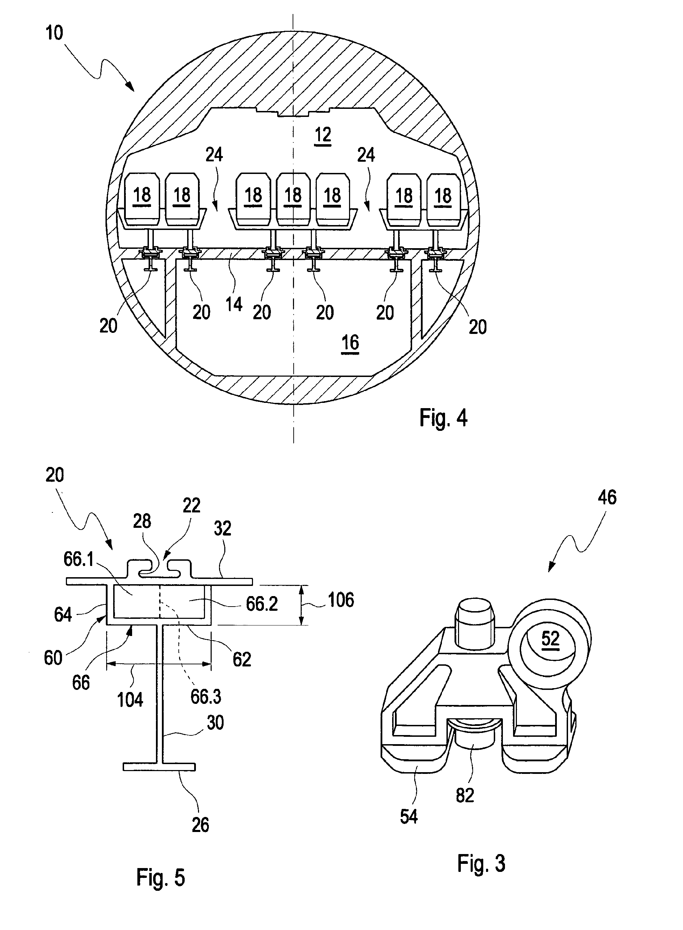

The passenger seat according to figure 3 comprises a seat surface 38 to which an adjustable backrest 36 is fastened. The adjustable backrest 36 may be actuated by actuating actuators such as electric motors being provided with an individual electrical connection within the cabin floor 14. Said passenger seat 18 furthermore comprises armrests labelled with reference number 34. Underneath said passenger seat 18, a seat frame 48 is provided having at least one mounting element 46, a mechanic coupling of said individual passenger seat 18 to said seat rail 20 according to figure 1. Figure 2 shows that said seat surface 38 of the individual passenger seat 18 is located in a seat surface height 50 with respect to the mounting element 46 of the individual passenger seat 18 to said seat rail 20. The backrest 36 is being adjustable from the position given in lines into the position 44 given in dotted lines. According to the adjustment area of the backrest 36 said individual passenger seat 18 according to figure 2 adopt a maximum inclination 44 when said passenger seat 18 in the backrest 36 is being inclined, resulting in a maximum distance 44.1, i.e. maximum length of said entire individual passenger seat 18 in case said backrest 36 is actuated in the inclined position, given in dotted lines according to figure 2.

Figure 3 shows a connection fitting for coupling an individual passenger seat to said supporting structure particularly a seat rail.

Said mounting element 46 between the individual passenger seat 18 and the supporting structure, such as a seat rail 20 comprises a tensioning bolt labelled reference number 54 as well as a shear-stud 82 .A connection fitting 68 still further comprises a fastening opening labelled with 52. Said connection fitting 68 according to figure 4 represents a component which is used according to the number of individual passenger seats 18 to be fastened and connected to said supporting structure 20 such as a seat rail. Corresponding to the distance of openings within said profile 22 of said supporting structures 20, particularly seat rails, said individual passenger seats 18 are mounted with a distance with respect to one another which are defined, according to the comfort requirements in the different classes, such as first class, business class and economy class. By means of the mounting element 46 said individual passenger seats 18 are located within the different comfort classes in different seat arrangement patterns taking into account the individual requirement of the different comfort classes.

Figure 4 shows a cross section of a passenger cabin of a passenger aero plane comprising the supporting structure according to the present invention.

Figure 4 shows supporting structures, particularly seat rails 20 integrated into the cabin floor 14 of a passenger cabin 12. Between rows of individual passenger's seats 18 aisles 24 are arranged to allow for servicing of the passengers. Underneath said cabin floor 14, the cargo compartment 16 is located.

Figure 5 shows in an enlarged scale the supporting structures, particularly seat rails in greater detail.

According to figure 5, said supporting structure, particularly the seat rail 20 each comprises a lower portion 26, a middle portion 30 and a plateau labelled with reference number 32. Underneath said plateau 32 a hollow interior 66, representing a hollow conductor 60 is arranged. Said hollow interior 66 representing the hollow conductor 60 of the supporting structure 20 comprises a bottom, i.e. a first side 62 and sidewalls labelled with reference number 64. Said plateau 32 and said lower portion 26 close said hollow interior 66 representing the hollow conductor 60 of the support structure 20 according to the present invention. Said plateau 32 of said supporting structure 20, particularly the seat rail 20, further comprises a recess 28 allowing for the positioning and fastening of said connection fittings 68. Into said recess 28 of the profile 22 of the supporting structure 20 said tensioning bolts 54 according to figure 3 are inserted. The individual passenger's seats 18 are positioned by means of said shear stud 82, rotatably arranged within said mounting element 46. Said hollow interior, given in figure 5 is shaped in rectangular fashion and may, however, as well be shaped as a circular embodiment or an oval cross section or in another suitable geometry for transmitting data. Still further it is conceivable to subdivide the said hollow interior 66 of said hollow conductor 60 according to figure 5 into different compartments as indicated by the dashed line given in figure 5 subdividing said hollow interior 66 into two portions, i.e. compartment 66.1 and compartment 66.2. Both compartments 66.1, 66.2 may be used given a partition 66.3 as being established according to the dashed lines given in figure 5 for transmitting individual data in receiving and sending direction, respectively.

According to the present invention said hollow interior 66 representing the hollow conductor 60 is confined by said first side 62 at the bottom and the top thereof and on the right hand and the left hand side by second sides 64. The second sides 64 are arranged within a width 104, sealing bottom and top of said hollow interior 66 being limited by the above mentioned portions arranged in a height 106 posing one another. Said hollow interior 66 of the supporting structure 20 may have a rectangular shape as shown in figure 5 and it may have a squared shape. Instead of one compartment forming the hollow interior 66 according to the present invention said hollow interior 66 may be subdivided into different hollow compartments. Each compartment is of different geometry such that by means the distribution within the hollow interior 66, i.e. between each of said different hollow compartments with different geometry, a band width distribution is achieved without further components by the geometry of the limitations of the hollow interior 66, only.

Said supporting structure 20 represented in figure 5 is being made as a single part by means of an extrusion method or may be made of aluminium or aluminium/titanium alloy. Alternatively, said supporting structure 20, according to figure 5, particularly a seat rail may be mounted of different peaces particularly a hollow conductor 66 comprising said plateau 32 being mounted to a middle portion 30 comprising said lower portion 26 to give an example.

The relation between width 104 and heights 106 of said side walls 62, 64 respectively, defines frequency sections within which data signals are being transmitted by means of the side walls 62, 64 respectively. The relation of width 104 to height 106 may be dimensioned so as to comprise a relation of 1 . 2 or 2 : 1 to give examples. The geometry of the side walls 62, 64 respectively is chosen according to different band widths to be transmitted. Depending on different frequency band width to be transmitted, i.e. a first, a second and a third band widths to separate data signals for the different comfort levels in different comfort classes, first class, business class and economy class, the geometry of the side walls 62, 64 may be chosen resulting in a determined width 104 and determined height 106 of the respective side walls 62, 64, respectively.

To avoid for interferences it is important to have the supporting structure 20, particular seat rails manufactured with high precision manufacturing tools. By means of a digital modulation method said data signals to be transmitted within the hollow interior 66 representing the hollow conductor 60 according to the present invention, it is possible to transmit a variety of multimedia applications 94 within said hollow interior 66 of the hollow conductor 60 according to the present invention.

Optionally, said hollow interior 66 of said supporting structure according to the present invention, particularly a seat rail 20 may be supplied with an inert gas or inert gas may be supplied continuously or in distinct intervals to said hollow interior 66, or oxygen depleted air, to prevent corrosion thereof. Still further, the application of an inert gas significantly decreases the risk of electrical short circuits between within the hollow interior 66 of said supporting structure 20, particularly a seat rail.

Corrosion has to be prevented, since corrosion usually attacks the surface of the inner walls, i.e. of said first and second walls 62, 64. This results in a high attenuation of the signals which in turn would result into a loss of signal strength given the entire length of a hollow conductor 60 having said hollow interior 66 as shown in figure 5.

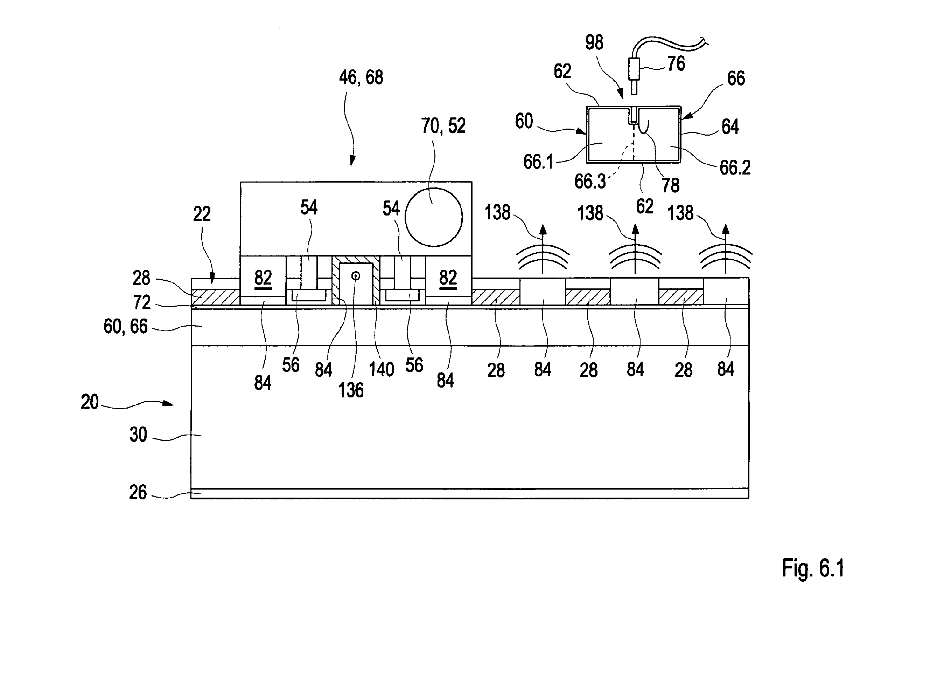

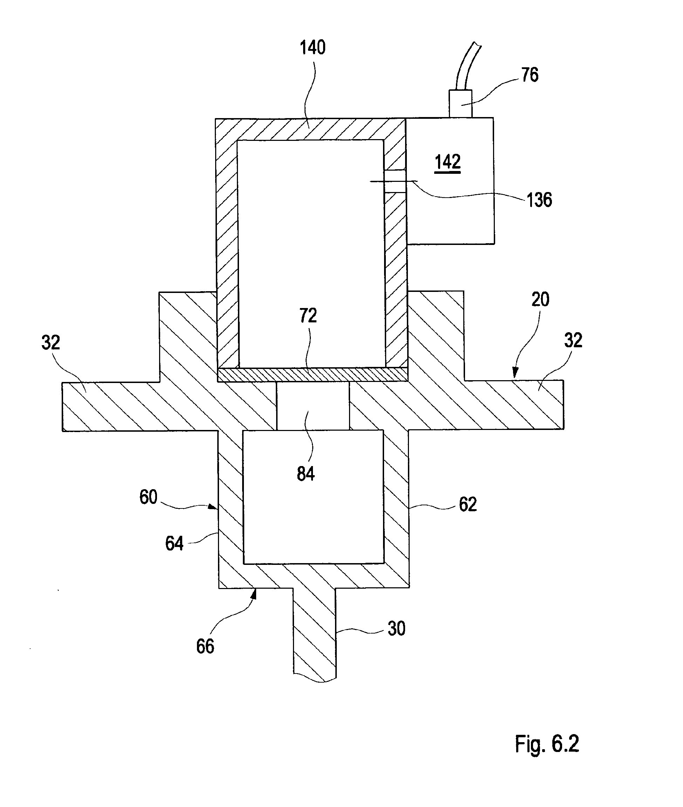

Figure 6.1 and 6.2, respectively, show a connection fittings being mounted on a supporting structure 20, particularly a seat rail arranged in the cabin floor 14 of a passenger cabin 12 as shown in figure 4.

According to Figure 6.1, said connection fitting 68 is connected by means of said tensioning bolts 54 and said fixed shear studs 82 engaging the recess 28 of the profile 22 provided on top of the plateau 32 of said supporting structure 20, particularly embodied as a seat rail 20. As shown in the scheme according to figure 6, said connection fitting 68 comprises a fastening opening 52 for engagement of bolts of said seat frame 48 of the individual passenger seat 18. The profile 28 of said supporting structure 20 according to the present invention comprises openings 84 in regular intervals for engagement of said shear studs 82. Still further, the connection fitting 68, each is equipped with signal a converter 74 providing for a transmission of data transported within the hollow conductor 60, i.e. the hollow interior 66 of said supporting structure 20 particularly a seat rail. Figure 6.1 shows that each of said tensioning bolts 54 comprises tensioning element 56 engaging said recess 28 of a seat rail cover 72 according to Figure 6.1. Said signal converter 74 dives into the hollow interior 66 establishing the hollow conductor 60 of the supporting structure 20, particularly a seat rail according to the present invention. As can be derived from figure 6.1 said mounting element 46 or connection fitting 68 each comprise besides said shear stud 82 a coupling hollow conductor 140 diving into an opening 84 provided on top of the supporting structure 20, i.e. provided on top of the seat rail 20. Said opening 84 of which a plurality are provided on top of said supporting structure 20 connecting the interior of said hollow conductor 60, i.e. the hollow interior 66 from media such as humidity or the like to prevent corrosion. Said coupling hollow conductor 140 serves as antenna 136 for the data transmitted within said hollow conductor 60, i.e. said hollow interior 66 of the supporting structure 20, particularly the seat rail 20. To said coupling hollow conductor 140 according to figure 6.1 a signal amplifier 142 is assigned which, however, is not shown in greater detail in figure 6.1.

As can be derived from figure 6.1, emission 138 on a very lower level is emitted via said openings 84. Said emission 138 is irradiated into the surrounding, i.e. the passenger cabin 12 on a very low level.

Still further, it is worthwhile mentioning, that said hollow conductor 60, i.e. the hollow interior 66, can be provided into different compartments 66.1 and 66.2 each being separated from one another by a partition given in dashed lines in figure 5. Said openings 84 provided in the supporting structure 20 for emission of data signals are individually arranged and could be changed into positions according to the required functions.

One way of providing the data signals into the hollow interior 66 of said hollow conductor 60 is a plug with a shielded cable 76 introduced into a signal outlet 98 of the supporting structure particularly said hollow interior 60 establishing said hollow conductor 60. Said signal outlets 98 may be arranged in different lateral positions so as to receive signals of a defined frequency band width, only.

By providing a plurality of signal outlets 98 on said first sides 62, i.e. on top of the hollow interior 66 the ceiling of the hollow interior 66, classifying of signals to be received by individual passenger seats taking into account the different comfort classes is conceivable. For instance, said supporting structures 20 mounted in the first class may have said signal outlets 98 in the middle of the first side 62, whereas those supporting structures 20 for use in business class or in economy class may comprise a signal outlet 98 arranged at the left hand or right hand side as compared to the embodiment of the hollow interior 60 in figure 6.1. According to figure 6.2 the arrangement shown infigure 6.1 is shown in greater detail.

According to figure 6.2 the coupling hollow conductor 140 according to the present invention is coupled via an antenna 136 to a signal amplifier 142 not shown in figure 6.1.. Said hollow conductor 140 is arranged above said opening 84 of said supporting structure 20, particularly a seat rail of an airplane. By means of said opening 84, the hollow interior 66 of said hollow conductor 60 is coupled to said antenna 136 of the coupling hollow conductor 140 according to the present invention. As best shown in the cross section according to figure 6.2, said hollow interior 66 of the hollow conductor 60 is limited by said first sides 62 and said second sides 64, respectively. As previously described in connection with figure 6.1 the opening 84 in said supporting structure 20 is covered by a seat rail cover 72 which is transmitted by said signals transmitted via said hollow interior 66 of the hollow conductor 60 of the supporting structure 20, particularly a seat rail 20. As best shown in figure 6.1 said mounting element 46 or connection fittings 68 each comprise signal converters labelled with reference number 74. By means of said signal converters 74, and said coupling hollow conductors 140 serving as an antenna 136, said signals provided by said supporting structure 20 are caught via antenna 136 and being transmitted to said signal amplifier 142. From said signal amplifier 142 data signals are provided to a conversion unit via a high frequency cable for example on coaxial cable.

Signal converter 74 in turn changes a said high frequency signal being provided by a DVB-module into an originally coding such as MPEG and Ethernet.

It is worthwhile mentioning that each opening 84 in said supporting structure 20, particularly a seat rail of an aeroplane, all signals are present. The selection or filtering of said signals will be transferred to and to be sent from individual seat are being performed within said signal converters 74

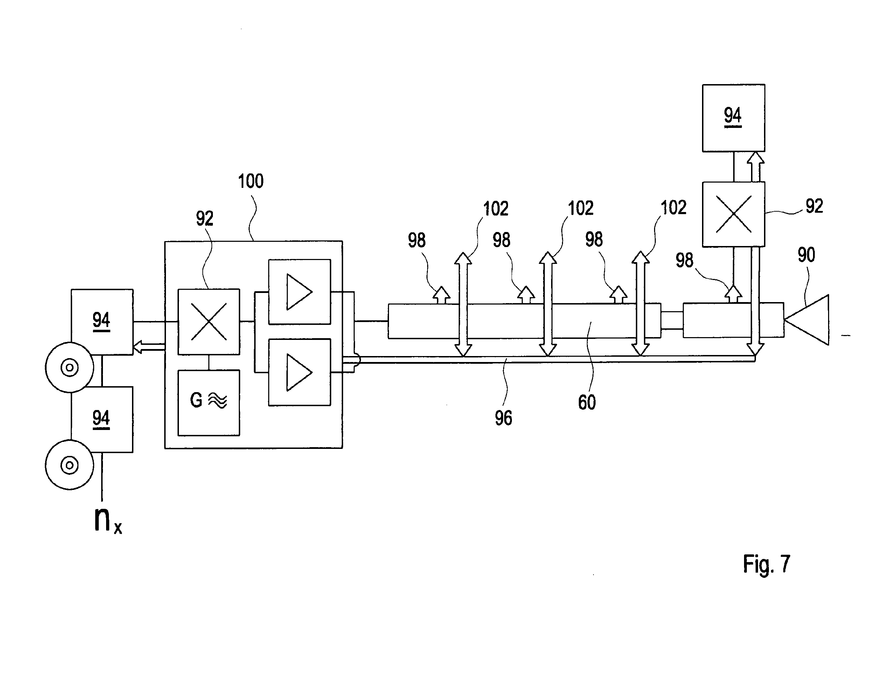

Figure 7 shows a connection scheme of signal entry and signal outlet concerning data signals transmitted within the hollow interior and distribution at individual passenger seats arranged in the passenger cabin.

According to figure 7, the in-flight entertainment system comprises multimedia applications 94 being transmitted within the processor 92 comprising various electronic chips at a signal entry 132. Reference number 98 depicts a signal outlet - as shown in connection with figures 6.1 and 6.2 respectively ― for a connection with a plug having a shielded cable 76. Said data signal coupled into a representing multimedia application 94 is transported via the hollow conductor 60 comprising said hollow interior 66. Reference numeral 98 depicts individual signal outlets at which signals are being transmitted to individual passenger seats 18. By means of a bi-directional bus system 102, an exchange of data into the receiving and emitting direction is established within the hollow conductor 60 and each individual passenger seat 18 connected to said hollow conductor 60 or a respective section thereof.

Still further, figure 7 discloses a digital modulator 100 comprising a at least one processor and different signal converters 74 allowing for different multimedia applications 94 to be coupled into said hollow conductor 60 of said supporting structure 20, particularly a seat rail.

Reference numeral 96 shows a reverse channel which may be formed by one of a pair of supporting structures, particularly seat rails 20,^{l} onto which the individual passenger seats 18 are mounted at distinct distances with respect to one another. Given the parallel arrangement of two supporting structures 20, particularly seat rails, one of said seat rails 20 may be used as a forward channel, i.e. providing signals to the individual passenger seats 18, whereas the other of the pair of seat rails 18 serves as a reverse channel 96.

Alternatively, it is conceivable, to have the data transfer between the master system (110, 112) and the individual seats 18 in first class, business class and economy class according to the different comfort levels, performed via one single supporting structure 20. i.e. one single seat rail. Therefore, different frequency band width are applicable to separate data signals from one another as well as a partition between the hollow interior 66 of the hollow conductor 60 is conceivable as well. Given the alternative embodiments, the arrangements of a pair of supporting structures 20, arranged substantially parallel to one another is feasible under a view of purposes of redundancy.

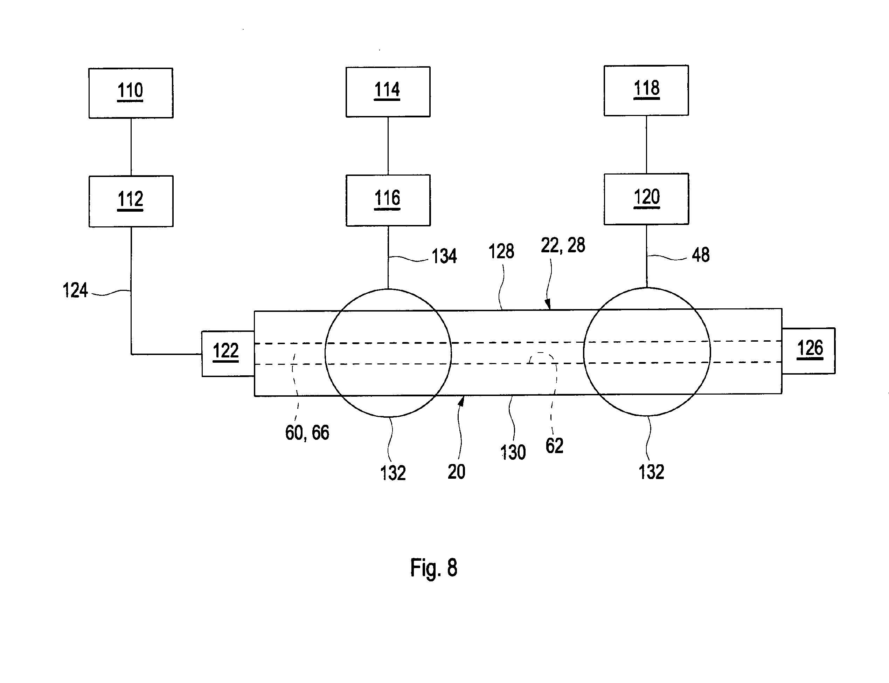

Figure 8 depicts an in-flight entertainment system according to the present invention which is integrated into the support structure, particularly a rail seat 20 comprising said hollow conductor 60 with a hollow interior 66 extending substantially in axial direction of the supporting structure, particularly the seat rail 20. Said in-flight entertainment system according to figure 8 comprises a local area network, telemetric devices and the multimedia applications 94 as described in connection with figure 7. The in-flight entertainment system according to the present invention using the data transmission by means of said hollow conductor 60 comprises a master system 110 comprising a transceiver 112. By means of said the master system 110 and a coaxial cable connection 124 the multimedia applications 94 are transmitted to a first transition section 122 which in the embodiment according to figure 8 establishes a signal entry into the hollow interior 66 of said hollow conductor 60 according to the present invention. According to figure 8, one section of the supporting structure 20, particularly a seat rail, is shown to which at a second transition section 126, i.e. a further section of a supporting structure 20, particularly a seat rail, can be fixed. In the alternative, said second transition section 126 may establish an end portion of a supporting structure 20, particularly a seat rail. As shown in the scheme according to figure 8, a first participant system 114 comprising a transceiver 116 is connected at a connection area establishing a signal inlet 132 and/or a signal outlet 98. At a further signal inlet 132 and/or a signal outlet 98, another participant system "n" having a transceiver "n" is fixed to the hollow conductor 60 having a said hollow interior 66 according to the present invention. The number of participant systems 1 to n may vary depending on the space available and depending on the length of the sections of the supporting structures 20, particularly seat rails according to the present invention. Still further, the number of participant systems 114, 118 being connected at the signal inlet and/or signal outlets 132, 98, respectively, may vary according to the different comfort requirements, i.e. first class, business class and economy class.

Reference number 128 depicts a top portion of the hollow conductor 60 where said profile 22 having a said actually extending recess 28 is provided. A bottom of said hollow conductor 60 is labelled to reference number 130. Reference numeral 134 depicts a conductive connection to the frame structure 48 of an individual passenger seat as best shown in figure 2. As an alternative to a conductive connection, a contact less data transfer via radiation and using said antenna 136 is feasible by the hollow interior of the coupling hollow conductor 140 as best shown in figure 6.1.

The in-flight entertainment system as depicted in connection with figure 8 is preferably mounted at a supporting structure 20, particularly a seat rail having two substantially parallel arranged rails allowing for the bi-directional communication. Concerning the bi-directional communication this may be implemented simultaneously in a seat rail system having two substantially parallel arranged supporting structures 20 as well as with in one single supporting structure, i.e. one single seat rail having the purpose of transmitting data a sending and receiving mode concerning the master system 110, 112 and concerning each of the individually arranged passenger seats 18.

A supporting structure 20, particularly seat rails for rows of individual passenger seats 18, is arranged extending substantially parallel to one another. One of said supporting structures, particularly seat rails 20, is used as a forward channel the other of said pair of supporting structures particularly seat rail 20 is used as rearward channel. By this arrangement, a separation of the data transport directions is applicable. A separation of the data transmittal is feasible as well by the choice of different frequency band widths, i.e. to choose one band width reserved for sending only and a differently chosen frequency band for receiving only. Due to the distance between the band widths chosen, no signal interferences will occur upon data transport in both directions of the hollow interior 66 of said hollow conductor 60 according to the present invention.

The data transport, i.e. the data signal transport in both directions may be established within one supporting structure 20, particularly a seat rail in both directions in a sending mode and in a receiving mode. Still further in an alternative embodiment, two parallel arranged supporting structures 20, i.e. two substantially parallel extending seat rails may be used for purposes of redundancy one being the forward directed channel, one being the reverse channel 96 still further within two supporting structures one of said seat rails 20 may be used in a data sending mode only and the other one in the data receiving mode with respect to the master system only.

The data transfer via one supporting structure of via two supporting structures 20. i.e. in a bidirectional mode is to be applied preferably taking into account that 80% of the data transmitted is sent from the master system to the individually passenger seats, whereas the percentage of about 20% of the data transmitted only is transmitted using the sending mode, i.e. from the individual passenger seats 18 to the respective master system 110, 112.

The supporting structure 20, particularly the seat rail can be part of a network such as a local area network (LAN) established within the passenger cabin 12. A plurality of supporting structures 20, particularly seat rails are part of said network creating the opportunity that each participant is part of said network, i.e. particularly a local area network being able to communicate directly with another or with said master system 110, 112, only. Said master system 110 as well as the participant system 1 - ...n, reference numbers 114 and 118, respectively, each comprise transceivers 112, 116 and 120, respectively. Said transceivers 116 and 120 of the participant systems 114, 118 are suitable to receive data only to create a broadcasting system within the passenger cabin 12. Said supporting structure 20 particularly embodied as a seat rail serves the purpose to transmit control signals sensor data or status reports of subunits such as seat rows, toilets, and kitchens. Said seat rails 20 allow to establish a data bus serving both, the passenger cabin 12 as well as the cargo department 16, located underneath the cabin floor 14 according to figure 4. Still further, it is conceivable to integrate into a supporting structure 20 particularly a seat rail, a plurality of hollow conductors 60.

Said supporting structure 20 particularly the seat rail replaces the separate, distinct cables and forms a part of the network, particularly a LAN network established within a passenger cabin 12 of underneath a respective cabin floor. Said plurality of hollow conductors 60 is provided with individual cross sections to allow for a data transfer of data having different and discrete band widths. For instance, said hollow conductor 60 may have a cross section as best shown in or in figure 5 respectively, which either can be of squared or of rectangular geometry or even may have a circular or oval cross section. In case that a plurality of hollow conductors 60 is integrated into supporting structure 20, particularly a seat rail, each hollow conductor 60 of the plurality of conductors 60 may have different cross section geometries, i.e. 66.1, 66.2, respectively.

As best shown in figure 5, said hollow conductor 60 may have a partition 66.3 which subdivides the hollow interior 66 of said hollow conductor 60 into a first compartment 66.1 and a second compartment 66.2. Said compartments 66.1, 66.2 respectively, may have an identical size or may have a size which differs from one another according to the transmitting requirements.

The in-flight entertainment system requires a significant lesser power level f or sending the data via the hollow conductors 60 as compared to a system which is state of the art. The power level used to transmit data via the hollow conductors 60 is ten times lesser as compared to a WLAN system and 100 times lesser as compared to a mobile phone or a cellular phone, respectively.

Irradiation 138 through said openings 84 into the passenger cabin 12 is minimized and occurs on a very low level only. Data transfer is established substantially within the hollow conductors 60 having said hollow interior 66 and in case of mechanical failures in the supporting structure 20 particularly a seat rail, the in-flight entertainment system is shut off automatically to prevent the occurrence of a strong irradiation into the passenger cabin 12. In connection with figure 6, it is noted that the signal outlet 98 on said supporting structure 20 particularly said seat rail, as a plug with a shielded cable reference number 76, to minimize irradiation 138 into the area of the passenger cabin 12, see figure 4.

The in-flight entertainment system uses a transmission technology such as digital broadcasting Terrestrial-Standard (DVB-T or DVB-C) and by use of an internet DVD-T-Bridge either Ethernet or a LAN is established by means of incorporation of said supporting structure, particularly said seat rail 20.

A modulation of data according to figure 7 in the digital modulator 100 is performed by use of Coded Orthogonal Frequency Division Multiplex (COFDM) other modulation methods are conceivable as well.

According to the present invention, said supporting structure 20 comprising the hollow conductor 60 includes a number of openings, representing an antenna 136 or an array antenna for the service of mobile networks. Thus, said supporting structure particularly said seat rail 20, establishes a distribute antenna system particularly within an aircraft. Said distributed antenna system serves the purpose to receive data via the hollow conductor 60 of said supporting structure, particularly said seat rail 20. Additional receiving antennas 136 with amplifiers 142 or amplification modules may be applied to increase the quality communication with mobile with mobile devices such as mobile phones or the like. Optionally, frequency changing devices and corresponding antennas 136 are located preferably in the vicinity of seat rails 20 or seat frames 48 as shown in figure 2. Multimedia applications 94 to be received and for communication use one or more of the following techniques: GSM, UMTS, WLAN, Bluetooth etc..

Still further, for the purpose of practicability, said supporting structure, particularly said seat rails are being sealed tightly versus liquids such as beverages or the like, which may spill over the cabin floor 14 of the passenger cabin 12.

The limitation of the present invention allows for the establishment of a LAN net within a passenger cabin 12 of a passenger aircraft, using said supporting structure 20, particularly embodied as seat rails 20 as data transferring devices instead of cables, plugs and other components, presently used. Since only one of the supporting structures 20 may be used as a bidirectional mode for transferring data into the direction from the individual passenger seat 18 to the master system 110, 112 and from the master system 110, 112 to the individual passenger seat 18 in a sending mode, the data signals are being separated from each other by implementation of different frequency band width. For redundancy purposes, the second i.e. parallel extending supporting structure 20 and the first mentioned supporting structure 20 may be used. Since advantageously supporting structures the data signals are being transmitted using different frequency band width, within a distance from one in another, the occurrence of interferences is prevented or at least minimized significantly. The LAN established by use of the present invention in a passenger cabin 12 is powered on a very low power level which in turn allows the minimization of irradiation 138 through the respective openings 84 on top of said supporting structures 20, i.e. particularly on the top of said seat rails 20.

Multi carrier modulation of the data to be transmitted is established preferably by the coded or the canal frequency division multiplex (COFDM-Method) which allows for an uniform distribution a sufficient signal strength and a sufficient separation of different signals addressed to individual passenger seats 18.

## Claims

1. Supporting structure, particularly seat rail (20) or a respective section thereof, having a mounting device (22, 28, 46, 68) by means of which individual passenger seats (18) are mounted and connected to said support structure (20), wherein said supporting structure (20) comprises at least one hollow interior (66, 66.1, 66.2), establishing a hollow conductor (60) for bidirectional transfer of data from a master system (110, 112) to a plurality of participant ― systems 1 - ... n, (114, 116; 118, 120) in a sending mode and from said participant system 1 - ...n, (114, 116; 118) said master system (110, 112) in receiving mode, establishing LAN within a passenger cabin (12) between the plurality of participant systems 1 - ...n, (114, 116; 118, 120) and said master system (110, 112).

2. Supporting structure according to claim 1 wherein said supporting structure comprises two seat rails (20) extending substantially parallel to one another within a passenger cabin (12) of an aircraft.

3. Supporting structure according to one of the preceding claims, wherein data signals are transmitted in at least one of said seat rails (20) in a first direction and in a reversed, second direction, simultaneously.

4. Supporting structure according to one of the preceding claims, wherein data signals are transferred within at least one of said seat rails (20) in a sending mode by using a first frequency band width and in a receiving mode by using a second frequency band width.

5. Supporting structure according to one of the preceding claims, wherein within said hollow conductor (60) the transfer of data signals is performed with an symmetrical or asymmetrical data transfer-rate, i.e. the portion of data signals sent to one participant system 1 - ... (114, 11; 118, 120) in a sending mode exceeds the portion of data signals received by the master system (110, 112) from said one of the participant systems 1 - ... n (114, 116; 118, 120) significantly, for example. a ratio of 80 : 20.

6. Supporting structure according to one of the preceding claims, wherein at least one seat rail (20) is part of a telecommunication network, such as a local area network (LAN).

7. Supporting structure according to one of the preceding claims, wherein each of the plurality of participant systems 1 ...n (114, 116; 118, 120) is part of said network either communicating with one another or communicating with a said master system (110, 112), respectively.

8. Supporting structure according to one of the preceding claims, wherein said participant systems 1 ... n (114, 116; 118, 120) each comprise a transceiver (116, 120) each comprise a transceiver (116, 120) with a receiving mode to establish a broadcast system.

9. Supporting structure according to one of the preceding claims, wherein a seat rail (20) comprises a plurality of hollow conductors (60), each hollow conductor (60) having individual compartments (66.1, 66.2) for transmitting data signals having different frequency band widths, said compartments being separated from one another by a partition( 66.3).

10. Supporting structure according to one of the preceding claims, wherein said hollow interior (66) has a squared, rectangular or circular or oval cross section.

11. Supporting structure according to one of the preceding claims, wherein upon mechanical distortion of said supporting structure (20), the flight-entertainment system is automatically shut down.

12. Method of operating an in-flight-entertainment system by means of data distribution via supporting structures (20) according to at least one of claims 1 to 11, wherein digital modulation of data is applied by Coded Orthogonal Frequency Division Multiplex (COFDM), said data distribution been performed by a defined, free configurable data transmission rate, and/or data transmission bend frequency, respectively.

13. Method according to claim 12, wherein said in-flight-entertainment system is operated by means of digital video broadcasting Terrestrial (DVB-T or DVB-C), been operated by a free configurable, well defined data transmission rate, and/or data transmission bend with, respectively.

14. Method according to claim 12 or 13 wherein in cooperation of said at least one supporting structure (20) and of an Ethernet-DVB-T Bridge, Ethernet or LAN is established within the passenger cabin (12), been established by means of a well-defined free configurable data transmission rate and/or data transmission bend frequency.

15. Supporting structure (20) according to one of claims 1 to 11, wherein a seat rail (20) comprises at least one opening (84) for data signal transfer from mobile networks, establishing a distributed system of antenna's within the passenger cabin (12).

16. Supporting structure according to claim 15, comprising additional receiving antennas (136) with amplifiers (142) or amplifying modules suitable for receiving signals via seat rails (20), said signals transmitted to said seat rails (20) in an amplified sending or amplified receiving mode.

17. Supporting structure according to claim 15, wherein frequency-changing-devices are located close to the vicinity of said seat rails (20) or said seat frames (48) of individual passenger seats (18), respectively.

18. Supporting structure according to claim 15, wherein said seat rails (20) are sealed tightly versus liquids.
